# EUROPEAN PATENT SPECIFICATION

(11) **EP 0 687 885 B1**
(45) Date of publication and mention of the grant of the patent: **16.09.1998**
(21) Application number: 94903183.5
(22) Date of filing: 01.12.1993
(51) Int. Cl.: F41A 23/34, F41H 11/02

(54) **VEHICLE SELF-DEFENCE SYSTEM**
FAHRZEUG-SELBSTVERTEIDIGUNGSSYSTEM
SYSTEME D'AUTODEFENSE POUR VEHICULE

(43) Date of publication of application: 20.12.1995
(73) Proprietor: Konstruktorskoe Bjuro Mashinostroenia, Moskovskaya obl., Kolomna, 140402 (RU)
(72) Inventor: GUSCHIN, Nikolai Ivanovich, Moskovskaya obl., Kolomna, 140400 (RU); KASHIN, Valery Mikhailovich, Moskovskaya obl., Kolomna, 140406 (RU); TIMOFEEV, Vladimir Ivanovich, Mokovskaya obl., Kolomna, 140406 (RU); KHARKIN, Vladimir Sergeevich, Moskovskaya obl., Kolomna, 140404 (RU); CHEKULAEV, Vladimir Alexandrovich, Moskovskaya obl., Kolomna, 140402 (RU); RYZHOV, Vladimir Ivanovich, Moskovskaya obl., Kolomna, 140411 (RU); GALCHENKO, Andrei Vasilievich, Moskovskaya obl., Kolomna, 140406 (RU); STULOV, Valentin Alexandrovich, Moskovskaya obl., Kolomna, 140406 (RU); KONOVALOV, Vitaly Serafimovich, Moscow, 123298 (RU); KHAKHALKIN, Vyacheslav Nikolaevich, Moscow, 123367 (RU); ROSTOVTSEV, Afrikan Andrianovich, Moscow, 142914 (RU); BARKHOTKIN, Vyacheslav Alexandrovich, Moscow, 103575 (RU); KASHUBSKY, Artur Zakharovich, Moskovskaya obl., Kolomna, 140406 (RU)
(74) Representative: Prechtel, Jörg, Dipl.-Phys. Dr.
(86) International application number: RU9300289
(87) International publication number: WO9515473

(56) References cited:
- EP-A- 0 199 447
- EP-A- 0 310 869
- EP-A- 0 525 305
- DE-A- 1 903 951
- DE-A- 3 410 467
- DE-B- 2 031 883
- FR-A- 2 642 515
- US-A- 5 229 540

## Description

The invention relates to the field of the pieces of ordnance mounted on the carrier. The pieces of ordnance of this type provide self-defence for the carriers preferably the tanks.

The tank self-defence system of Marconi is known that comprises two machine-guns, a stationary cm-wavelength search radar and a guidance radar derived from the Thin-wavelength seeker of the HELLFIRE missile.

The search radar transmits the acquisition signal of the attacking munition to the guidance radar and under the latter's control fire is automatically triggered to defeat antitank guided missiles and other low-velocity munitions. (Military Technology, 1988, v.12, #9, pp.100, 106, 107)

The system is not efficient enough in self-defence against attacking munitions incoming at a more higher velocity.

A system according to the preamble part of claim 1 is known from DE-A- 34 10.4.67. According to this prior art the the multi-barreled artillery piece provides self-defence for the carriers generally the tanks. It comprises a rotating platform mounted onto the tank turret with barrels being radially arranged to provide the all-round tank defence. The center platform part mounts the radar to acquire the attacking munition.

To lay in the barrel it is necessary to additionally rotate the platform by means of a special-purpose drive. In this connection plenty of time is required to aim the system. The self-defence efficiency of the carrier will not be high enough. This artillery piece provides a wide kill envelope dangerous to the neighbouring hardware situated in immediate proximity thereto.

It is an object of the invention to provide a fundamentally new self-defence system to intercept and defeat attacking munitions within a wide range of their flight velocities.

A further object of the invention is to provide a system with a relatively small kill envelope not dangerous to the neighbouring hardware situated in immediate proximity to the carrier protected. To solve at least one of these objects a system according to claim 1 is proposed.

The nature of the system proposed is that an arrangement of launch pits is placed around the tank turret providing the all-round defence of the tank. Each of the launch pits is of a rectangular section and inclined preferably at an angle of 25-40 deg. to a vertical tank axis. The launch pit is outfitted with a round comprising a box-type case, a propelling charge, a communication and an antiprojectile. The antiprojectile consists of a box-type body made from a non-metallic material, a fragmentation plate-type charge, a fragmentation lining to generate a directional fragment field.

As proposed in claim 5 the antiprojectile is outfitted with a correction pulse engine to turn the antiprojectile. The correction engine is coupled via the communication line to a block for round selection and round ejection and antiprojectile detonation command generation.

As proposed in claim 2 a radar range meter comprises a first master oscillator connected to a modulating signal generator, a first output thereof is connected to a first input of a transmitter signal modulator, a second input thereof is connected to a power amplifier with an input of the latter connected to a first output of a second master oscillator, an output of the transmitter signal modulator is connected to a transmitting antenna , a second output of the modulating signal generator is connected to an input of a delayed modulating signal generator, an output thereof is connected to a first input of a local oscillator signal modulator with a second input of the latter connected to an output of a first frequency converter, a first input thereof is connected to a second output of a second master oscillator and a second input is connected to an output of a third master oscillator, an output of the local oscillator signal modulator is connected to a power divider with the latter's first output connected to a first input of a second frequency converter of a reference channel, a second input thereof is connected to a first receiving antenna, a second output of the power divider is connected to a first input of a third frequency converter of a measurement channel, a second input thereof is connected to a second receiving antenna, a second input of the delayed modulating signal generator is connected to a memory block of estimated detection zones of the attacking munition.

As proposed in claim 3, the carrier self-defence system claimed is provided with a block to predict the entry of the attacking munition into the system's kill envelope, the block comprises a meter to measure a phase difference between the signals of reference and measurement channels, an output of the meter is connected to a first input of a generalized coordinates determination device, a first output thereof is connected to a first input of a calculator of a flight time of the attacking munition to a calculated boundary of the kill envelope, a second output is connected to a storage register of a preceding coordinate and to a first input of a comparison circuit, a second input thereof is connected to an output of the storage register of the preceding coordinate, an output of the comparison circuit is connected to a first input of a round number determination device with the latter's second input connected to a first output of the calculator of the flight time of the attacking munition to the calculated boundary of the kill envelope, a second input thereof is connected to a Doppler frequency meter, and its second output is connected to a first gate and to an input of a first controlled time counter of generation of a round ejection command, a second input of the first gate is connected to an output of a fourth master oscillator, an output of the first gate is connected to a second input of the first controlled time counter of generation of the round ejection command, an output thereof is connected to a first input of a second gate with the latter's second input connected to an output of the fourth master oscillator, and an output of the second gate is connected to a second controlled time counter of generation of an antiprojectile detonation command.

As proposed in claim 4 the self-defence system claimed also contains the block for round selection and generation of ejection and detonation command comprising an analyzer of a pulse train passage sequence, a first input thereof is connected to the round number determination device and a second input to outputs of both the first time counter of generation of the round ejection command and the second time counter of generation of the antiprojectile detonation command, and an output thereof is connected to a timer input with the latter's output connected to third and fourth gates coupled to reservoir capacitors which are connected to anodes of first thyristors, the former of the two is controlled by a first shaper of the round ejection pulse and the latter by a second shaper of the antiprojectile detonation pulse, cathodes of the first thyristors are connected to anodes of second thyristors and to anodes of third thyristors controlled by a round number decoder, an input thereof is connected to the round number determination device, cathodes of the second thyristors are connected to igniters of the propelling charges, cathodes of the third thyristors are connected to detonators to initiate the antiprojectile.

The self-defence system claimed allows to provide the effective all-round protection of the carrier against munitions fire within a wide range of their flight velocities.

An inclination of the launch pits of 25-40 deg. to the vertical axis of the carrier provides a conical kill zone of small size. The box-type shape of the antiprojectile with a fragmentation charge formed as a plate provides a powerful flat-topped detonation wave propagating into a desired direction.

The antiprojectile is initiated at a minimum safe distance from the tank thus providing a high system reaction.

The range meter provides a high radar resolution, improved resistance to active jamming and natural noises.

Integration into the self-defence system of the prediction block of the entry of the attacking munition into the system's kill envelope as well as of the block for round selection and generation of its ejection and detonation command improves the system precision and provides the one-round kill of the attacking munition.

Said block selects tank-harmless targets and reduces the false operation probability.

The random ejection and detonation signals are blocked at output by the analyzer of the pulse train passage sequence within the block for round selection and generation of its ejection and detonation command.

With a correction pulse engine available, a shower of killing fragments propelled is directed to an intercept point predicted thus enhancing a munition intercept ratio or decreasing the total round load and weight of the system.

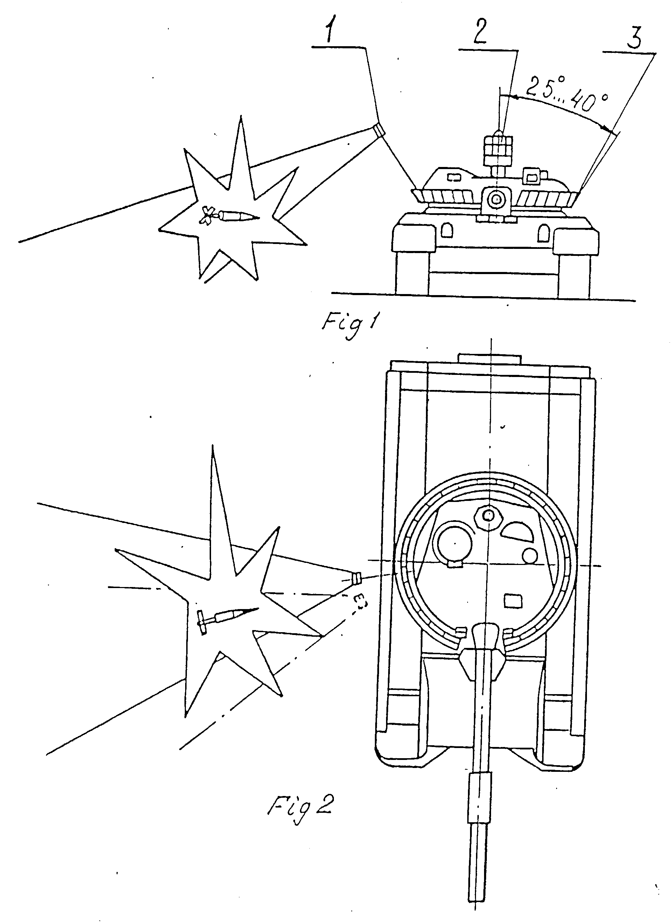

Fig.1,2 are front and top views of a system configured on a tank turret.

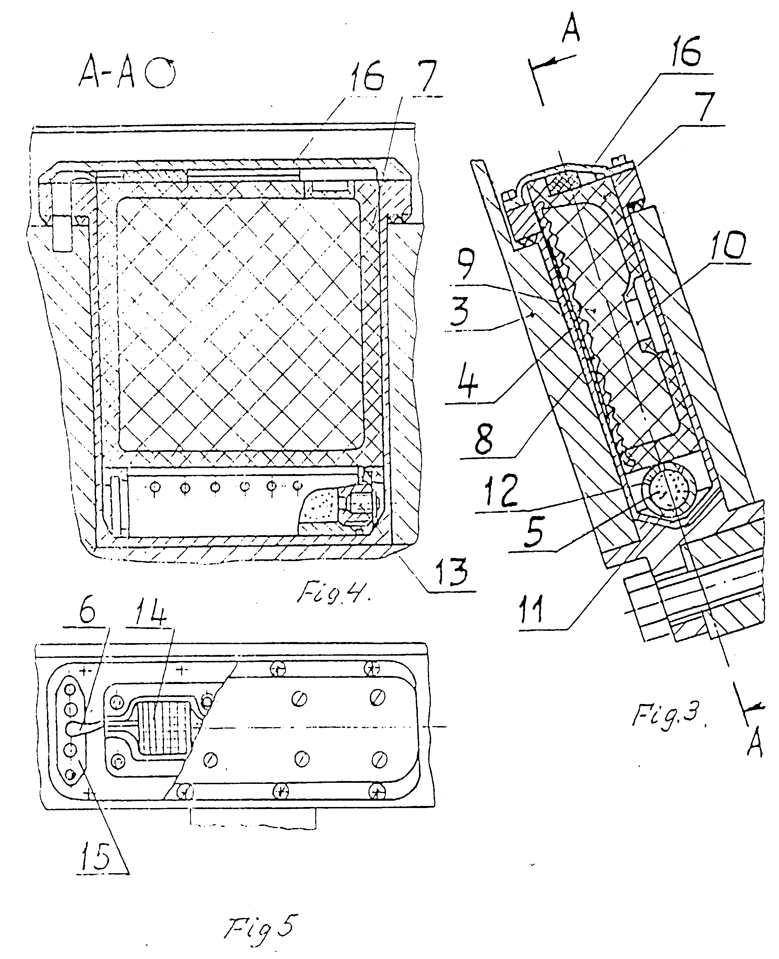

Fig.3, 4, 5 are three projections of a round in a launch pit.

Fig.6, 7, 8 are three projections of the round with built-in antiprojectile turning engine.

Fig.9, 10 are front and top views of a system configuration with correction-capable rounds on the tank turret.

Fig.11 is a functional diagram of a radar with a range meter.

Fig.12 is a functional diagram of a prediction block of an entry of an attacking munition to a system's kill envelope.

Fig.13 is a functional diagram of a block for round selection and generation of its ejection and detonation command.

Launch pits 3 with self-defence system rounds are evenly spaced round a periphery of a tank turret and provide an all-round tank defence. A tank top mounts a radar 2. Each round comprises an antiprojectile 1, a case 4 of rectangular cross-section, a propelling powder charge 5 and a wire communication assembly 6.

The antiprojectile 1 consists of a plastic housing 7, a shaped fragment lining 8, a fragmentation charge 9 and a fuze 10 for detonation.

The case 4 integrates the round as a complete hermetically sealed assembly and protects a launch pit hole against damage, dirt, moisture after round ejection. The propelling powder charge 5 ejects the antiprojectile 1 to a minimum distance of its safe initiation. Said charge 5 comprises a cylindrical gas-generator housing 11 with nozzle holes 12 carrying the powder charge inside. An electric igniter 13 is placed on one of its ends.

The wire communication assembly 6 conducts electric pulses through the wire to the electric igniter 13 of the propelling powder charge 5 and to the fuze 10. The wire communication line is constructed as a flat coil 14. The case flange also incorporates an electric connector 15 to couple the round to a control system harness. A protective cover 16 is placed on top of the round. Each round is put into the launch pit of rectangular cross-section, a front pit wall protects against flat-trajectory fire.

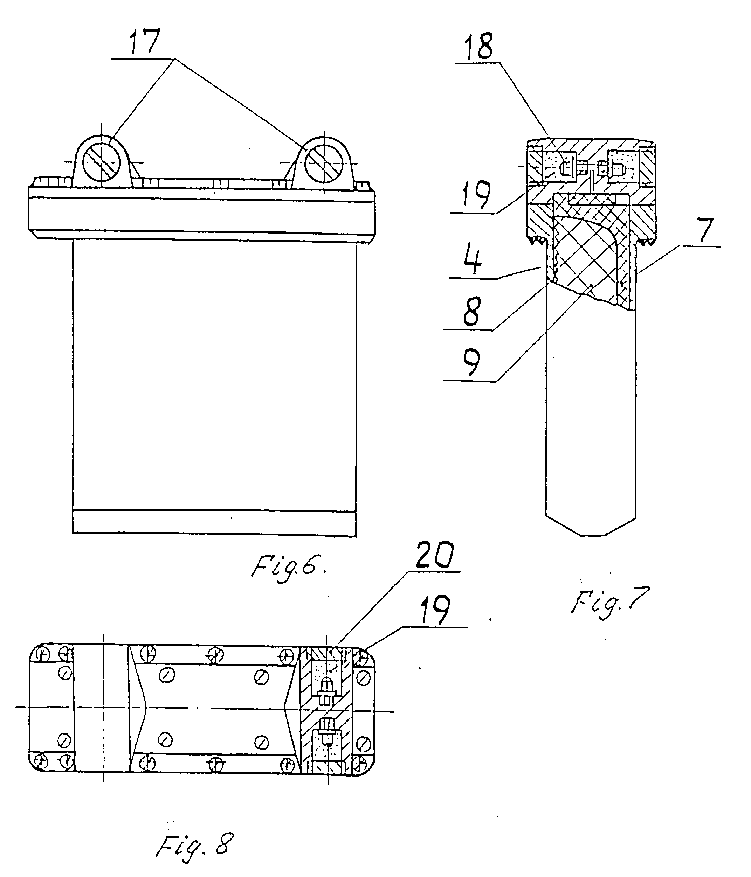

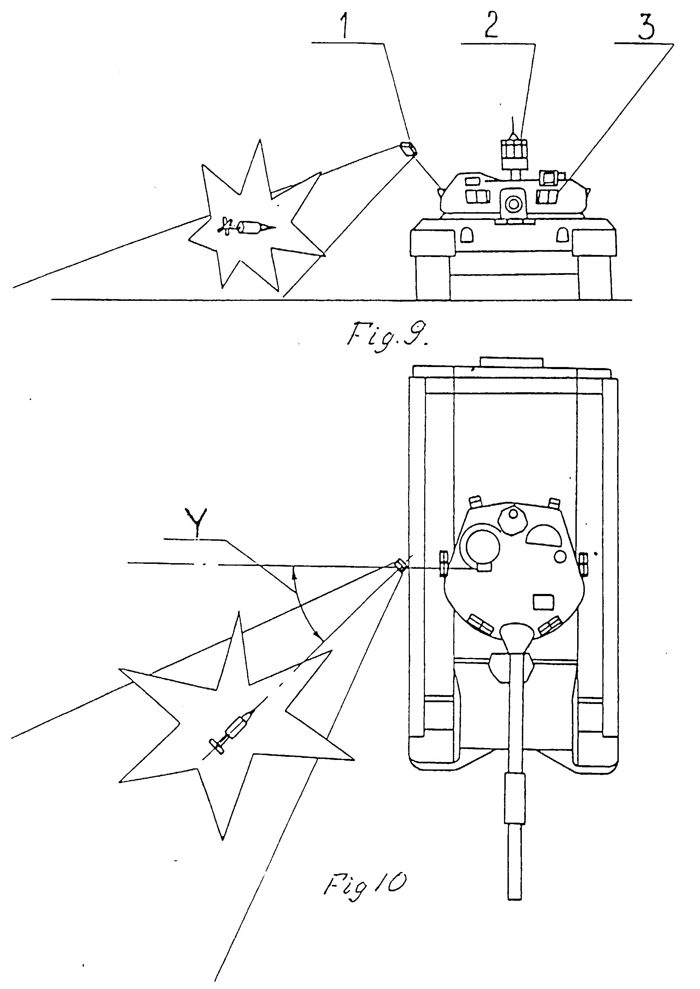

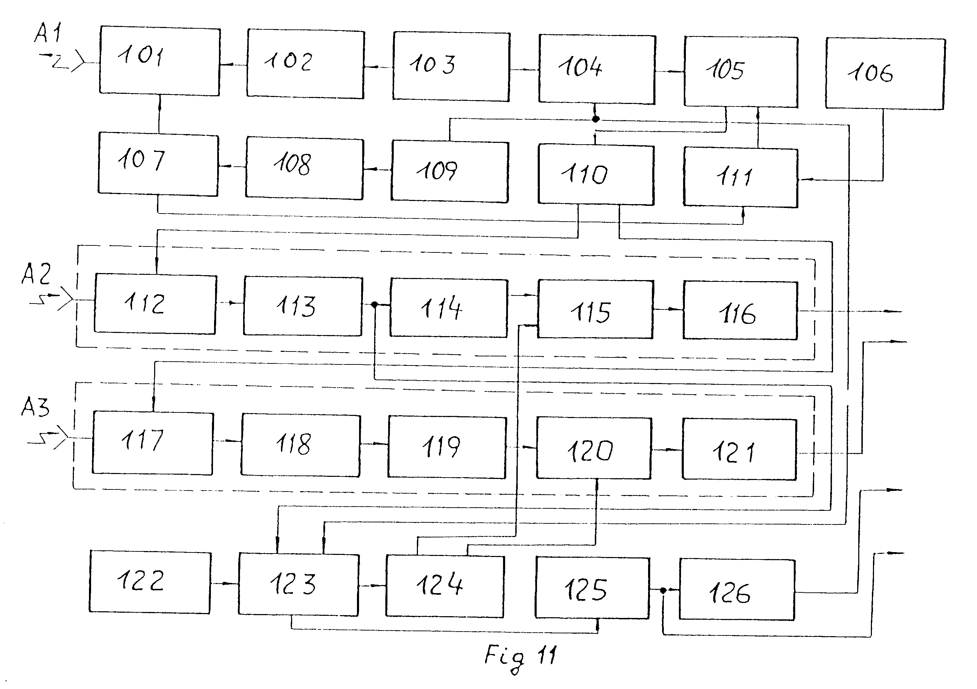

A top of the round can house four correction pulse engines 17 with detonators 18, powder charges 19 and ejectable pieces 20 to turn an in-flight antiprojectile 1 about its own center of mass through a calculated angle after ignition of two spaced powder charges 19 at a specific time point and ejection of pieces 20 accomplished on instruction of the block for round selection and generation of its ejection and detonation command (refer to Fig.6 through 11).

The control system of said means includes a radar 2 with a range meter, prediction block of entry of the attacking munition to the self-defence system's kill envelope and a block for round selection and generation of its ejection and detonation command.

Fig.11 explains the operation of the range meter of the radar 2.

A carrier signal from a master oscillator 103 arrives through a power amplifier 102 to a modulator 101 of a transmitter signal. Said modulator 101 modulates the carrier signal with a signal coming from a modulating signal generator 107. An output signal of the modulator 101 of the transmitter signal is emitted via an antenna A1 into the open space. The signal issued by the modulating signal generator 107 arrives at the same time to both the modulator 101 of the transmitter signal and to a delayed modulating signal generator 111, said delay is varied by means of applying a signal of an estimated detection zone number of the attacking munition from a memory block 106 to an input of said generator. The delayed modulating signal is conducted to a signal shaper of a first local oscillator. The signal shaper of the first local oscillator comprises a frequency converter 104, a modulator 105 and a power divider 110. The carrier signal from the master oscillator 103 is applied to a first input of the frequency converter 104 and a second input receives a signal of a first intermediate frequency from a master oscillator 109, an output signal from the frequency converter 104 comes to a first input of the modulator 105, a second input thereof receives the modulating delayed signal. The signal of the first local oscillator comes from a modulator 105 output via the power divider 110 to first frequency convertors 112, 113 of reference and measurement channels.

Both the reference and measurement channels of the radar have the same components.

We consider now the operation of the reference channel. A signal from the receiving antenna A2 comes to a first input of the frequency convertor 112 and at its second input arrives a signal from the divider 110 of the first local oscillator. From an output of the frequency convertor 112 a signal on a frequency equal to a value difference between an intermediate frequency and a Doppler frequency of the attacking munition enters a filter 113 to prefiltrate signals returned from the attacking munition.

A signal from the filter 113 output comes to an amplifier 114 and from the latter's output to a first input of a frequency convertor 115, a second input thereof receives a signal from a second local oscillator. At the same time an output signal of the filter 113 arrives at a first input of a frequency, convertor 123, a second input thereof receives a signal of a first intermediate frequency from the master oscillator 109, to a third input thereof is applied a signal from a master oscillator 122. From a first output of the frequency convertor 123 a Doppler frequency signal containing information on a velocity comes via Doppler selection filter 125 to a Doppler frequency meter 132 and to a range signal shaper 126, an output signal thereof enters a device 127 of the generalized coordinates determination. From the second output of the frequency convertor 123 the signal comes via a power divider 124 to second inputs of the frequency convertors 115, 120 of the reference and measurement reception channels. From outputs of the frequency convertors 115, 120 a signal on a frequency equal in value to that of a second intermediate frequency comes via amplifiers 116, 121 to a first input of a phase difference meter 128 of the prediction block.

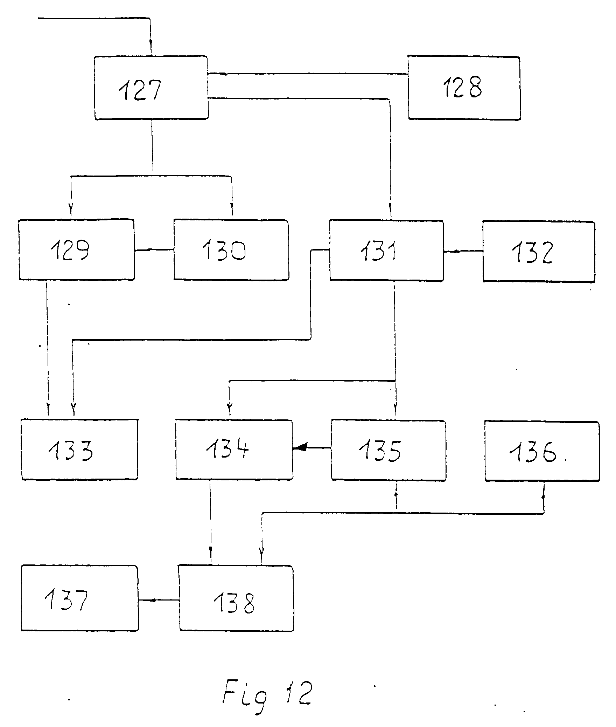

The operation of the measurement reception channel is analogous with that of the reference reception channel with an output signal thereof being applied to a second input of the phase difference meter 128. A phase difference between the reference and measurement reception channels contains information on angular trajectory parameters of the attacking munition. The prediction block of entry of the attacking munition into a system's kill envelope (Fig.12) has the device 127 of generaiized coordinates determination, a first input thereof receives a phase difference code and a second input thereof an attacking munition range code. Said device converts the codes of electrical values of the trajectory parameters to space codes of generalized coordinates. A first output signal of the device 127 of generalized coordinates determination comes to a first input of a calculator 131 of flight time of the attacking munition to an estimated kill envelope boundary, a Doppler frequency code is applied to its second input from a Doppler frequency meter 132. The calculator 131 calculates the flight time of the attacking munition to the estimated kill envelope boundary, a code of said time is entered into a controlled counter 134 of an ejection time command and to a second input of a round number determination device 133.

From a second output of the device 127 of generalized coordinates determination a code enters a preceding coordinate storage register 130 and a comparison circuit 129. The comparison circuit 129 compares the code values, the difference between the code values comes to an input of the round number determination device 133. Said device multiplying the difference value of the codes of the generalized coordinates by a factor determined by the flight time of the attacking munition to the estimated kill envelope determines the defensive round number and generates a defensive round selection signal that enters the generation block of ejection and detonation command.

Gate 135 issues pulses from a master oscillator 136 to read the code of the calculated flight time of the attacking munition to the kill envelope. At the counter 134 contents reset an instruction is generated to eject the antiprojectile and another instruction is issued to put in operation a gate 138, simultaneously a reading starts of contents of a detonation command time counter 137 by pulses from the master oscillator 137. At resetting of the contents of said counter 137 the detonation command is generated. Duration of the ejection and detonation commands is set.

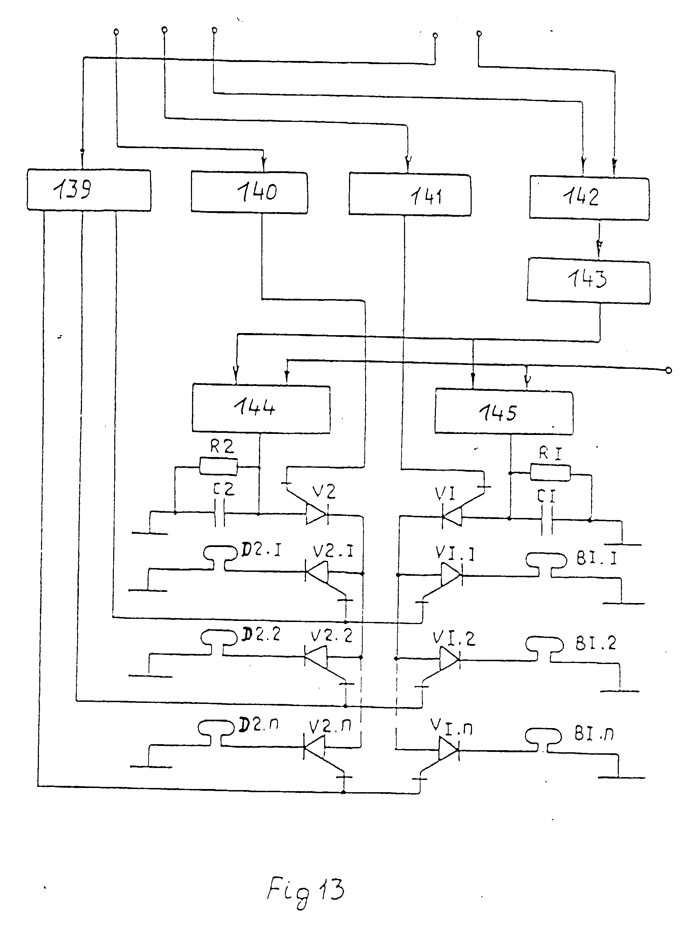

The generation block (Fig.13) of the ejection and detonation command has an analyzer 142 of a passage sequence of defensive round number code pulses. Missing the round number code generates an instruction to start a timer 143, a count time thereof is set and determined by a maximum possible time of presence of the attacking munition in a service area of the radar 2. A wrong sequence of the pulse train passage cancels starting the timer 143 and gates 145 and 144 are cut off, reservoir capacitors C1 and C2 are discharged by means of resistors R1 and R2 respectively.

At timer starting its output signal is generated to turn both the gate 145 and the gate 144 on while the capacitors C1 and C2 are being charged to serve as electric energy accumulators necessary to put in operation igniters B11, B12 ... B1n and detonators D21, D22 ... D2n respectively. With the timer count completed and the ejection or detonation command passed the instruction is generated to cut off the gate 145 and the gate 144, the reservoir capacitors C1 and C2 are discharged through the resistors R1 and R2 respectively. An ejection pulse shaper 141 and a detonation pulse shaper 140 form the pulses required to control the operation of turn-off thyristors V1 and V2 respectively.

At the output of a decoder 139 the signals are formed that are required to control the operation of thyristors V11, V12 ... V1n and V21, V22 ... V2n with turning on the specific thyristor pairs dependent on the code of the selected round number.

The thyristors V11, V12 ... V1n and V21, V22 ... V2n are connected by an AND logic. Thus the reservoir capacitor C1 is discharged to an igniter selected at a simultaneous presence of both the ejection pulse and the defensive round number pulse, and the reservoir capacitor C2 is discharged to a detonator selected at a simultaneous presence of both the detonation pulse and the round number pulse.

The system operates as follows:

With an attacking munition entering the radar service area, the radar input signal comes to the prediction block of entry of the attacking munition to the system's kill envelope. The prediction block analyzes the signals received and switches the radar 2 to the measurement mode. Information on the attacking munition parameters (range, velocity, azimuth, elevation) are fed back to the prediction block. While measuring the prediction block controls the radar operation and calculates, from the data obtained during measurement, the entrance point of the attacking munition to the system's kill envelope.

If the trajectory calculated does not run into the tank profile the calculation is terminated and the radar 2 switches to the search mode. If the attacking munition trajectory hits within the tank outline so the required round is selected and a command is generated to eject it.

The electric pulse from the block for round selection and generation of its ejection and detonation command is conducted through the wire line 6 to the igniter followed by the ignition of the powder charge 5 of the gas generator, through the nozzle exits thereof the exhaust flows into the behind-the-antiprojectile space. The starting movement of the antiprojectile 1 interrupts the control circuit of the presence of the round in the launch pit and the unreeling of the microcable of the communication assembly 6 sets in. The g-load removes the fuze safety barrier, arms the fuze 10.

During the flight of the antiprojectile 1 to the detonation point the prediction block determines the time of entering the attacking munition to the kill envelope more precisely and calculates the antiprojectile detonation time followed by the detonation command generation.

In the case of the embodiment of the defensive round with the correction pulse engines 17 the block for round selection and generation of its ejection and detonation command generates, following the antiprojectile ejection, additionally an electric pulse at a specific time point through the wire line to initiate the correction engine charges, thus by the detonation time making the antiprojectile 1 to turn to the predicted entry point of the attacking munition to the kill envelope of the self-defence system.

The detonation of the antiprojectile 1 produces the directional high-energy fragment shower, its hitting the attacking munition causes the latter's detonation in flight or reduces its action against the armour to the level not dangerous to the carrier. After the round ejection the launch pit holds the case that serves to protect it and the connector against dirt and moisture.

The tanks equipped with the system proposed feature the combat survivability enhanced by a factor of 1.5 to 2. The effectiveness and functionability of the system claimed are verified by manufacture and trials of the brassboard models.

## Claims

1. A self-defence system of a carrier, for example a tank, comprising: a radar (2) to search for and measure trajectory parameters of an attacking munition, and rounds placed on upper parts of said carrier and forming an all-round defence, each round being located in a launch device (3) and having a propelling charge (5) and an antiprojectile (1), characterized in that said system is outfitted with: a prediction block of entry of the attacking munition to a system's kill envelope, a block for round selection and generation of ejection and detonation command, wherein the round is put into the launch pit (3) of a rectangular cross-section placed at an inclination preferably at an angle of 25° to 40° to a vertical axis of the carrier, the antiprojectile (1) includes a case (4) of a box-type shape made preferably of a non-metallic material, a fragmentation charge (9) in form of a plate, a fragmentation lining (8) to form a directed fragment field, and a fuze (10) is coupled via a communication line (6) to the block for round selection and generation of ejection and detonation command.

2. A self-defence system of a carrier as set forth in claim 1, wherein a range meter of said radar (2) comprises a first master oscillator (108) connected to a modulating signal generator (107), a first output thereof is connected to a first input of a transmitter signal modulator (101), a second input thereof is connected to a power amplifier (102) with an input of the latter connected to a first output of a second master oscillator (103), an output of the transmitter signal modulator (101) is connected to a transmitting antenna A1, a second output of the modulating signal generator (107) is connected to an input of a delayed modulating signal generator (111), an output thereof is connected to a first input of a local oscillator signal modulator (105) with a second input of the latter connected to an output of a first frequency converter (104), a first input thereof is connected to a second output of the second master oscillator (103) and a second input is connected to an output of a third master oscillator (109), an output of the local oscillator signal modulator (105) is connected to a power divider (110) with the latter's first output connected to a first input of a second frequency converter (112) of a reference channel, a second input thereof is connected to a first receiving antenna (A2), a second output of the power divider (110) is connected to a first input of a third frequency converter (117) of a measurement channel, a second input thereof is connected to a second receiving antenna (A3), a second input of the delayed modulating signal generator (111) is connected to a memory block (106) of estimated detection zones of the attacking munition.

3. A self-defence system of a carrier as set forth in claims 1,2, wherein said prediction block of entry of the attacking munition into the system's kill envelope comprises a meter (128) to measure a phase difference between signals of the reference and measurement channels, an output of the meter (128) is connected to a first input of a generalized coordinates determination device (127), a first output thereof is connected to a first input of a calculator (131) of flight time of the attacking munition to a calculated boundary of the kill envelope, a second output is connected to a storage register (130) of a preceding coordinate and to a first input of a comparison circuit (129), a second input thereof is connected to an output of the storage register (130) of the preceding coordinate, an output of the comparison circuit (129) is connected to a first input of a round number determination device (133) with the latter's second input connected to a first output of the calculator (131) of the flight time of the attacking munition to the calculated boundary of the kill envelope, a second input thereof is connected to a Doppler frequency meter (132), and its second output is connected to a first gate (135) and to an input of a first controlled time counter (134) of generation of a round ejection command, a second input of the first gate (135) is connected to an output of a fourth master oscillator (136), an output of the first gate (135) is connected to a second input of the first controlled time counter (134) of generation of the round ejection command, an output thereof is connected to a first input of a second gate (138) with the latter's second input connected to an output of the fourth master oscillator (136), and an output of the second gate (138) is connected to a second controlled time counter (137) of generation of an antiprojectile detonation command.

4. A self-defence system of a carrier as set forth in claims 1,2,3, wherein said block for round selection and generation of ejection and detonation command comprises an analyzer (142) of a pulse train passage sequence, a first input thereof is connected to the round number determination device (133) and a second input to outputs of both the first time counter (134) of generation of the round ejection command and the second time counter (137) of generation of the antiprojectile detonation command, and an output thereof is connected to a timer (143) input with the latter's output connected to a third gate (145), and a fourth gate (144) coupled to reservoir capacitors (C1,C2) which are connected to anodes of first thyristors (V1,V2), the former of the two is controlled by a first shaper (141) of the round ejection pulse and the latter by a second shaper (140) of the antiprojectile detonation pulse, with cathodes of the first thyristors (V1,V2) connected to anodes of second thyristors (V11,V12,...V1n) and anodes of third thyristors (V21,V22,...V2n) controlled by a round number decoder (139), with an input thereof being connected to the round number determination device (133), cathodes of the second thyristors (V11,V12,...V1n) connected to igniters (B11,B12,.... B1n) of the propelling charges (5), cathodes of the third thyristors (V21,V22,...V2n) connected to deto nators (D21,D22,...D2n) to initiate the antiprojectile (1).

5. A self-defence system of a carrier as set forth in claim 1, wherein said antiprojectile (1) is outfitted with a correction pulse engine (17) to turn it about its centre of mass and whith is coupled through a communication line to said block for round selection and generation of ejection and detonation command.

## Patentansprüche

1. Ein Fahrzeug-Selbstverteidigungssystem, z.B. eines Panzers, welches eine Radarstation (2) zur Entdeckung und Messung der Flugbahnparameter eines angreifenden Geschosses und sich auf Oberteilen des Fahrzeugs befindende und die Rundumverteidigung bildende Munitionseinheiten hat, wobei jede Munitionseinheit in einem Startgerät (3) untergebracht ist und eine Treibladung (5) und ein Gegengeschoß (1) aufweist, dadurch gekennzeichnet, daß es ausgestattet mit einer Einheit zur Voraussage des Einflugs des angreifenden Geschosses in die Bekämpfungszone des Selbstverteidigungssystems, einer Einheit zur Auswahl einer Munitionseinheit und Befehlsausgabe für deren Ausstoß und Detonation ist, wobei die Munitionseinheit in einem Startschacht (3) eines rechteckigen Querschnitts untergebracht ist, der schräg, vorzugsweise beim Winkel von 25° bis 40° zur senkrechten Achse des Fahrzeugs, gestellt ist, und ein Gegengeschoß (1) ein Kastengehäuse (4), vorzugsweise aus nichtmetallischem Werkstoff, hat, welches eine Sprengladung (9) in der Form einer Platte, einen Splitterbelag (8) einschließt, der ein gerichtetes Splitterfeld erzeugt, wobei ein Zünder (10) über eine Verbindungsleitung (6) an die Einheit zur Auswahl einer Munitionseinheit und Befehlsausgabe für deren Ausstoß und Detonation angeschlossen ist.

2. Ein Fahrzeug-Selbstverteidigungssystem nach Anspruch 1, dadurch gekennzeichnet, daß ein Entfernungsmesser einer Radarstation (2) einen ersten Steuergenerator (108) hat, welches an einen Modulationssignalgenerator (107) angeschlossen ist, wobei dessen erster Ausgang mit einem ersten Eingang eines Sendersignalmodulators (101), dessen zweiter Eingang mit einem Leistungsverstärker (102) verbunden ist, wobei dessen Eingang an einen ersten Ausgang eines zweiten Steuergenerators (103) angeschlossen ist, ein Ausgang des Sendersignalmodulators (101) mit einer Sendeantenne (A1) verbunden ist, ein zweiter Ausgang des Modulationssignalgenerators (107) an einen Eingang eines Modulationssignalgenerators mit Verzögerung (111) geschaltet ist, dessen Ausgang an einen ersten Eingang eines Überlagerersignalmodulators (105) angeschlossen ist, dessen zweiter Eingang mit einem Ausgang eines ersten Frequenzwandlers (104) verbunden ist, wobei sein erster Eingang an einen zweiten Ausgang des zweiten Steuergenerators (103) und zweiter Eingang an einen Ausgang eines dritten Steuergenerators (109) geschaltet ist, wobei ein Ausgang des Überlagerersignalmodulators (105) an einen Leistungsverteiler (110) angeschlossen ist, dessen erster Ausgang an einen ersten Eingang eines zweiten Frequenzwandlers (112) eines Referenzkanals und sein zweiter Ausgang an eine erste Empfangsantenne (A2) angeschlossen ist, ein zweiter Ausgang des Leistungsverteilers (110) an einen ersten Eingang eines dritten Frequenzwandlers (117) eines Meßkanals geschaltet ist, dessen zweiter Eingang mit einer zweiten Empfangsantenne (A3) verbunden ist, ein zweiter Eingang des Modulationssignalgenerators mit Verzögerung (111) an eine Einheit (106) zur Speicherung von Berechnungsbereichen der Entdeckung eines angreifenden Geschosses geschaltet ist.

3. Ein Fahrzeug-Selbstverteidigungssystem nach einem der Ansprüche 1, 2, dadurch gekennzeichnet, daß eine Einheit zur Voraussage des Einflugs eines angreifenden Geschosses in die Bekämpfungszone des Selbstverteidigungssystems einen Messer (128) der Phasendifferenz zwischen Referenz- und Meßkanalsignalen aufweist, dessen Ausgang einem ersten Eingang einer Einrichtung zur Berechnung der verallgemeinerten Koordinaten (127) zugeschaltet ist, deren erster Ausgang an einen ersten Eingang eines Rechners (131) der Flugzeit des angreifenden Geschosses bis zur Berechnungsgrenze der Bekämpfungszone und sein zweiter Ausgang an ein Speicherungsregister (130) der vorangegangenen Koordinate sowie an einen ersten Eingang einer Vergleichsschaltung (129) geschaltet ist, deren zweiter Eingang an einen Ausgang des Speicherungsregisters (130) der vorangegangenen Koordinate und ihr Ausgang an einen ersten Eingang einer Einrichtung zur Munitionsnummerbestimmung (133) angeschlossen ist, deren zweiter Eingang mit einem ersten Ausgang des Rechners (131) der Flugzeit des angreifenden Geschosses bis zur Berechnungsgrenze der Bekämpfungszone verbunden ist, dessen zweiter Eingang einem Doppler-Frequenzmesser (132) und sein zweiter Ausgang einem ersten Schalter sowie einem Eingang eines ersten gesteuerten Zeitzähler (134) der Ausgabe eines Befehls zum Munitionsausstoß zugeschaltet ist, ein zweiter Eingang des ersten Schalters (135) einem Ausgang eines vierten Steuergenerators (136) und ein Ausgang des ersten Schalters (135) einem zweiten Eingang des ersten gesteuerten Zeitzählers (134) der Ausgabe eines Befehls zum Munitionsausstoß zugeschaltet ist, dessen Ausgang an einen ersten Eingang eines zweiten Schalters (138) angeschlossen ist, dessen zweiter Eingang einem Ausgang des vierten Steuergenerators (136) und ein Ausgang des zweiten Schalters (138) einem zweiten gesteuerten Zeitzähler (137) der Ausgabe eines Befehls zur Gegengeschoßdetonation zugeschaltet ist.

4. Ein Fahrzeug-Selbstverteidigungssystem nach Ansprüchen 1, 2, 3, dadurch gekennzeichnet, daß eine Einheit zur Auswahl einer Munitionseinheit und der Ausgabe eines Befehls für deren Ausstoß und Detonation einen Analysator (142) einer Impulsfolge aufweist, dessen erster Eingang an eine Einrichtung zur Munitionsnummerbestimmung (133), ein zweiter Eingang an Ausgänge eines ersten Zeitzählers der Ausgabe eines Befehls zum Munitionsausstoß (134) und eines zweiten Zeitzählers zur Gegengeschoßdetonation (137) und sein Ausgang an einen Eingang eines Timers (143) angeschlossen ist, ein Timerausgang mit einem dritten Schalter (145) und einem vierten Schalter (144) verbunden ist, die an Speicherkondensatoren (C1, C2) geschaltet sind, welche an Anoden erster Thyristoren (V1, V2) angeschlossen sind, wobei der erstere von einem ersten Impulsformer (141) für Munitionsausstoß und der letztere von einem zweiten Impulsformer (140) für Gegengeschoßdetonation gesteuert werden, die Katoden der ersten Thyristoren (V1, V2) sind an Anoden zweiter Thyristoren (V11, V12, ... V1n) und Anoden dritter Thyristoren (V21, V22, ... V2n) angeschaltet, welche von einem Munitionsnummerdechiffrator (139) gesteuert sind, dessen Eingang an die Einrichtung zur Munitionsnummerbestimmung (133) angeschlossen ist, wobei Katoden der zweiten Thyristoren (V11, V12, ... V1n) an Anzünder (B11, B12, ... B1n) der Treibladungen (5) und Katoden der dritten Thyristoren (V21, V22, ... V2n) an Detonatoren (D21, D22, ... D2n) zur Sprengung eines Gegengeschosses (1) geschaltet sind.

5. Ein Fahrzeug-Selbstverteidigungssystem nach Anspruch 1, dadurch gekennzeichnet, daß ein Gegengeschoß (1) mit einem Impulskorrekturtriebwerk (17) zum Drehen um den Massenmittelpunkt ausgestattet ist, welches an eine Einheit zur Auswahl einer Munitionseinheit und Befehlsausgabe für deren Ausstoß und Detonation über eine Verbindungsleitung geschaltet ist.

## Revendications

1. Système d'autodéfense pour véhicule, par exemple pour char, comprenant un radar (2) de détection et de mesure des paramètres de trajectoire d'un projectile attaquant ainsi que des munitions placées sur les parties extérieures de véhicule et constituant la défense circulaire, chaque munition est installée dans un dispositif de tir (3) et munie d'une charge propulsive (5) et d'un antiprojectile (1), système caractérisé par le fait qu'il comprend en outre un bloc de prévision de l'entrée du projectile attaquant dans le domaine d'action du système d'autodéfense, un bloc de choix de la munition et de génération de commande de son éjection et de son explosion, en cela, la munition est installée dans un puits de lancement (3) à section rectangulaire disposé avec inclinaison, de préférence sous un angle de 25 à 40 par rapport à l'axe vertical de véhicule, l'antiprojectile (1) a un corps, de préférence en matériau non métallique, sous la forme de boîte, dans lequel une charge explosive (9) sous la forme de plaque est installée, un revêtement d'éclatement (8) formant la gerbe d'éclats focalisée, en cela le détonateur (10) est connecté au bloc de choix de la munition et de génération de commande d'éjection et d'explosion à l'aide d'une ligne de liaison (6).

2. Système d'autodéfense pour véhicule selon la revendication 1, caractérisé par le fait qu'un mesureur de distance du radar (2) faisant partie du système comporte un premier oscillateur pilote (108) raccordé à un générateur de signal modulant (107) dont la première sortie est connectée à la première entrée d'un modulateur de signal de transmetteur (101) dont la deuxième entrée est connectée à un amplificateur de puissance (102) dont l'entrée est connectée à la première sortie d'un deuxième oscillateur pilote (103), la sortie du modulateur (101) de signal de transmetteur est connectée à une antenne de transmission (A1), la deuxième sortie du générateur de signal modulant (107) est connectée à la première entrée d'un générateur de signal modulant à retard (111) dont la sortie est connectée à la première entrée d'un modulateur de signal d'hétérodyne (105) dont la deuxième entrée est connectée à la sortie d'un convertisseur de fréquence (104) dont la première entrée est connectée à la deuxième sortie du deuxième oscillateur pilote (103), et la deuxième entrée est connectée à la sortie d'un troisième oscillateur pilote (109), en cela la sortie du modulateur de signal d'hétérodyne (105) est connectée à un diviseur de puissance (110) dont la première sortie est connectée à la première entrée d'un deuxième convertisseur de fréquence (112) de canal de référence dont la deuxième entrée est connectée à une première antenne de réception (A2), la deuxième sortie du diviseur de puissance (110) est connectée à la première entrée d'un troisième convertisseur de fréquence (117) de canal de mesure dont la deuxième entrée est connectée à une deuxième antenne de réception (A3), et la deuxième entrée du générateur de signal modulant à retard (111) est raccordée à un bloc de mémoire (106) des zones de détection du projectile attaquant calculées.

3. Système d'autodéfense pour véhicule selon l'une des revendications 1 ou 2 caractérisé par le fait que le bloc de prévision de l'entrée du projectile attaquant dans la domaine d'action du système comprend un mesureur (128) de déphasage des signaux des canaux de référence et de mesure dont la sortie est connectée à la première entrée d'un dispositif de mesure des coordonnées généralisées (127) dont la première sortie est connectée à la première entrée d'un calculateur (131) du temps de vol du projectile attaquant jusqu'à la limite calculée du domaine d'action, la deuxième sortie est connectée à un registre de mémorisation de la coordonnée précédente (130) et à la première entrée d'un comparateur (129) dont la deuxième entrée est connectée à la sortie du registre de mémorisation de la coordonnée précédente (130), et la sortie du comparateur (129) est connectée à la première entrée d'un dispositif de détermination de numéro de la munition (133) dont la deuxième entrée est connectée à la première sortie du calculateur (131) du temps de vol du projectile attaquant jusqu'à la limite calculée du domaine d'action dont la deuxième entrée est connectée à un mesureur de fréquence Doppler (132), et sa deuxième sortie est connectée à la première entrée d'un premier commutateur (135) et à l'entrée d'un premier compteur commandé du temps (134) de génération de commande d'éjection de la munition, et la deuxième entrée d'un premier commutateur (135) est connectée à la sortie d'un quatrième oscillateur pilote (136), la sortie du premier commutateur (135) est connectée à la deuxième entrée du premier compteur commandé de temps (134) de génération de commande d'éjection de la munition dont la sortie est connectée à la première entrée du deuxième commutateur (138) dont la deuxième entrée est connectée à la sortie du quatrième oscillateur pilote (136), et la sortie du deuxième commutateur (138) est connectée à un deuxième compteur commandé du temps (137) de génération de commande d'explosion de l'antiprojectile.

4. Système d'autodéfense pour véhicule selon l'une des revendications 1, 2 ou 3 caractérisé par le fait que le bloc de choix de la munition et de génération de commande de son éjection et de son explosion comprend un analyseur (142) de séquence du passage d'impulsions dont la première entrée est connectée au dispositif de détermination de numéro de la munition (133), et la deuxième entrée est connectée aux sorties des compteurs du temps de génération de commandes d'éjection de la munition (134) et de son explosion (137), et la sortie est connectée à l'entrée d'un timer (143) dont la sortie est connectée à un troisième commutateur (145) et à un quatrième commutateur (144) raccordés aux capacités de stockage (C1,C2) qui sont connectés aux anodes de premières thyristors (V1, V2), le premier parmis eux est commandé par un premier formateur (141) d'impulsion d'éjection de la munition et le deuxième est commandé par un deuxième formateur d'impulsion (140) d'explosion de la munition, en cela les cathodes des premières thyristors (V1, V2) sont raccordés aux anodes de deuxièmes thyristors (V11, V12,...V1n) et aux anodes de troisièmes thyristors (V21, V22,...V2n) commandés par un décodeur du numéro de munition (139) dont l'entrée est connectée au dispositif de détermination de numéro de la munition (133), et en cela les cathodes des deuxièmes thyristors (V11, V12,...V1n) sont connectés aux inflammateurs (B11, B12,...B1n) des charges propulsives (5), et les cathodes des troisièmes thyristors (V21, V22,...V2n) sont connectés aux détonateurs (D21, D22,...D2n) d'explosion de l'antiprojectile (1).

5. Système d'autodéfense pour véhicule selon la revendication 1, caractérisé par le fait que l'antiprojectile (1) comprend un propulseur de correction par impulsion (17) pour le virage autour du centre des masses connecté au bloc de choix de la munition et de génération de commande de son éjection et de son explosion à l'aide de la ligne de liaison.
